# EUROPÄISCHE PATENTSCHRIFT

(11) **EP 0 472 959 B1**
(45) Veröffentlichungstag und Bekanntmachung des Hinweises auf die Patenterteilung: **18.10.1995**
(21) Anmeldenummer: 91113194.4
(22) Anmeldetag: 06.08.1991
(51) Int. Cl.: G01F 1/24, G01F 1/72, G01F 1/22

(54) **Verfahren und Vorrichtung zur Bestimmung der Durchflussmenge eines Fluids mit einer pulsierenden Strömung**
Method and probe for determining the volume flow of a pulsing fluid flow
Procédé et dispositif pour déterminer le débit d'écoulement d'un fluide pulsatoire

(30) Priorität: 27.08.1990 DE 4027028
(43) Veröffentlichungstag der Anmeldung: 04.03.1992
(73) Patentinhaber: PROMINENT DOSIERTECHNIK GMBH, 69123 Heidelberg (DE)
(72) Erfinder: Hartfiel, Johannes, Dr., W-6700 Ludwigshafen (DE)
(74) Vertreter: Knoblauch, Andreas, Dr.-Ing.

(56) Entgegenhaltungen:
- DE-A- 3 010 282
- DE-A- 3 341 661
- DE-A- 3 433 741
- DE-A- 3 941 981
- DE-C- 823 797
- US-A- 3 931 737
- US-A- 4 523 480

## Beschreibung

Die Erfindung betrifft ein Verfahren zur Bestimmung der Durchflußmenge eines Fluids mit einer pulsierenden Strömung mit Hilfe eines in einem Meßrohr frei beweglichen Schwebekörpers, der entgegen der Strömungsrichtung von einer Rückstellkraft beaufschlagt ist, und einen Durchflußmesser mit einem Meßrohr und einem im Meßrohr frei beweglichen Schwebekörper, der entgegen der Strömungsrichtung von einer Rückstellkraft beaufschlagt ist. Ein solches Verfahren und eine solche Vorrichtung sind aus der US-A-3 931 737 bekannt.

In einigen Anwendungsbereichen, beispielsweise bei Dosierpumpen, ist es erwünscht, die Durchflußmenge einzelner Strömungspulse, beispielsweise einzelner Dosierpulse, messen zu können. Da mit Dosierpumpen häufig aggressive, toxische oder umweltgefährdende Stoffe gefördert werden, wird aus Sicherheits- und Umweltschutzgründen zunehmend gewünscht, daß die Förderleistung einer Dosierpumpe überwacht wird. Bekannte Durchflußmeßgeräte sind dafür nur bedingt geeignet, da sie nur eine geringe Dynamik aufweisen und eine kontinuierliche Strömung bzw. eine zeitlich nur langsam veränderliche Strömung verlangen. Hierzu zählen beispielsweise Meßverfahren mit einem Schwebekörperdurchflußmesser, bei dem ein Schwebekörper in einem Meßrohr frei beweglich ist. Das Meßrohr steht in der Regel senkrecht und wird von unten nach oben durchflossen, so daß der Schwebekörper entgegen der Strömungsrichtung von der Schwerkraft beaufschlagt ist. Bei einer anderen Anordnung kann der Schwebekörper auch von einer Rückstellfeder belastet sein. Man hat versucht, den Schwebekörper in einem Meßrohr als Grenzwertschalter zu verwenden, um die Förderleistung einer Pumpe auf Unterschreitung einer Mindestfördermenge überwachen zu können. Nachteilig hierbei ist, daß grundsätzlich nur die Überwachung eines fest vorgegebenen Grenzwerts möglich ist. Dies reicht in vielen Fällen nicht mehr aus. Vielmehr wird eine quantitative Überwachung der Förderleistung verlangt. Andere Verfahren, wie magnetisch-induktive Durchflußmessung, Ultraschall und Massemessung nach dem Coriolis-Prinzip sind zwar prinzipiell in der Lage, pulsförmige Strömungen zu messen. Derartige Verfahren sind jedoch teuer in der Anwendung. Da das Ausgangssignal der für diese Verfahren verwendeten Meßeinrichtungen in der Regel verrauscht ist, ist eine Rauschunterdrückung notwendig. Diese Rauschunterdrückung verhindert aber auch die Messung von kurzen Strömungspulsen. Durchflußmesser nach dem Verdrängerprinzip, Turbinenzähler und Flügelradzähler werden durch pulsierende Strömungen auf Dauer zerstört.

Es ist die Aufgabe der vorliegenden Erfindung, ein Verfahren und eine Vorrichtung anzugeben, mit der die Durchflußmenge eines Fluids mit starken Strömungspulsen ermittelt werden kann.

Diese Aufgabe wird durch ein Verfahren der eingangs genannten Art dadurch gelöst, daß die Geschwindigkeit des Schwebekörpers im Meßrohr ständig gemessen und aus der Geschwindigkeit des Schwebekörpers die Durchflußmenge ermittelt wird.

Voraussetzung für das Verfahren ist, daß zwischen zwei Strömungspulsen eine ausreichend lange Zeitspanne liegt, in der das Fluid nicht oder nur mit geringer Strömungsgeschwindigkeit fließt. Solche Strömungsverläufe treten bei vielen diskontinuierlichen Dosieraufgaben auf, beispielsweise bei Dosierpumpen mit Magnetantrieb. Mit dem Verfahren ist es möglich, die Durchfluß- oder Fördermenge jedes einzelnen Strömungspulses zu bestimmen. Die Messung kann somit wesentlich genauer erfolgen als bei einem Verfahren, bei dem die Fördermenge über mehrere Pulse gemittelt wird. Ein im Meßrohr strömendes Fluid reißt den Schwebekörper mit. Zwischen dem Schwebekörper und der Wand des Meßrohres befindet sich ein Ringspalt, durch den Fluid am Schwebekörper vorbeifließen kann. In Strömungsrichtung gesehen ist der Druck hinter dem Schwebekörper also kleiner als der Druck vor dem Schwebekörper. Wenn die durch die Druckdifferenz resultierende Kraft auf den Schwebekörper größer ist als die rückstellende Kraft, wird der Schwebekörper durch das Fluid mittransportiert. Hinzu kommen Reibungskräfte zwischen Schwebekörper und Fluid. Je schneller das Fluid strömt, desto schneller bewegt sich auch der Schwebekörper. Aus der Geschwindigkeit des Schwebekörpers läßt sich also die Geschwindigkeit des Fluids ermitteln. Aus dem Verlauf der Geschwindigkeit läßt sich eine Aussage über die durch das Meßrohr geströmte Strömungsmenge treffen.

Bevorzugterweise wird der Beginn der Bewegung des Schwebekörpers ermittelt, wobei die Geschwindigkeit über eine vorbestimmte Integrationszeit aufintegriert und der Integrationswert in die Durchflußmenge umgerechnet wird. Die zeitliche Integration der Geschwindigkeit ergibt eine Aussage über den vom Schwebekörper zurückgelegten Weg. Aus dem vom Schwebekörper zurückgelegten Weg läßt sich auf das durchgeflossene Volumen schließen. Die Integrationszeit kann variabel sein, wobei die Grenzen zu ihrer Bestimmung vorbestimmt sind.

Mit Vorteil ist die Integrationszeit durch die Zeit zwischen Beginn und Ende der Bewegung des Schwebekörpers in Strömungsrichtung des Fluids bestimmt. In diesem Fall erhält man eine exakte Aussage über den vom Schwebekörper insgesamt zurückgelegten Weg. Hierdurch ist eine sehr präzise Volumenbestimmung möglich.

In einer weiteren bevorzugten Ausführungsform ist die Integrationszeit bei Strömungspulsen mit konstanter und bekannter Dauer vorgegeben, wobei die Integration am Beginn der Bewegung gestartet wird. Wenn die Dauer der Strömungspulse bekannt ist, beispielsweise weil die die Strömungspulse erzeugende Dosierpumpe von ihrem Aufbau her bekannt ist, reicht es aus, über eine Zeit zu integrieren, die der Förderzeit der Dosierpumpe entspricht. Die geförderte Menge kann hierbei variieren, was zu unterschiedlichen Wegstrecken führt, die der Schwebekörper zurücklegt. Bei dieser Ausführung muß das Ende der Bewegung des Schwebekörpers nicht mehr festgestellt werden.

Mit Vorteil wird der Beginn bzw. das Ende der Bewegung des Schwebekörpers durch das Überschreiten einer ersten bzw. Unterschreiten einer zweiten Geschwindigkeit ermittelt. Die beiden Geschwindigkeiten können gleich sein, müssen aber nicht. Erst, wenn die Geschwindigkeit des Schwebekörpers einen vorbestimmten Wert überschreitet, geht man davon aus, daß ein Strömungspuls vorliegt, der gemessen werden muß.

Vorteilhafterweise wird der Integrationswert mit dem mittleren Querschnitt des Meßrohres multipliziert, wobei gegebenenfalls ein Korrekturwert hinzugefügt wird, um die Durchflußmenge zu erhalten. Wenn die Verluste über den Ringspalt zwischen Schwebekörper und Meßrohr zu vernachlässigen sind, d.h. beispielsweise der Ringspalt sehr eng, die Dichte des Schwebekörpers nur wenig größer als die Dichte des Fluids oder die Viskosität des Fluids sehr groß ist, erhält man auch ohne Korrekturwert einen ausreichend genauen Wert für die Durchflußmenge. In diesem Fall bewegt sich der Schwebekörper praktisch um das geförderte Volumen im Meßrohr weiter. Da der Integrationswert der vom Schwebekörper zurückgelegten Wegstrecke entspricht, läßt sich aus der Wegstrecke und dem bekannten mittleren Querschnitt des Meßrohres das Volumen errechnen.

Die Strömungsverluste über den Ringspalt können jedoch nicht beliebig kleingemacht werden, da der Schwebekörper zwischen zwei Strömungspulsen auch wieder eine Ausgangslage einnehmen muß. Da die Sinkgeschwindigkeit des Schwebekörpers, d.h. die Geschwindigkeit in Richtung der Rückstellkraft, zwischen zwei Strömungspulsen und die Strömungsverluste über den Ringspalt während der Förderphase dieselbe Ursache haben, bedeutet ein geringer Spaltverlust gleichzeitig eine sehr langsame Sinkgeschwindigkeit zwischen zwei Strömungspulsen. Um zu erlauben, daß die Strömungspulse auch einen kürzeren Anstand haben können, wird in einer bevorzugten Ausführungsform zur Ermittlung des Korrekturwerts eine mittlere Sinkgeschwindigkeit des Schwebekörpers in Richtung der Rückstellkraft ermittelt, solange kein Strömungspuls vorhanden ist. In diesem Fall kann man den Ringspalt größer machen, so daß der Schwebekörper relativ rasch in seiner Ausgangsposition zurücksinken kann.

Zur Ermittlung der Sinkgeschwindigkeit ist es von Vorteil, wenn die Sinkgeschwindigkeit aufintegriert und durch eine Sinkzeit dividiert wird. Hierdurch kann man eine mittlere Sinkgeschwindigkeit errechnen, die vorteilhafterweise zur Bildung des Korrekturwerts verwendet werden kann.

In einer vorteilhaften Ausgestaltung wird der Korrekturwert durch das Produkt aus mittlerer Sinkgeschwindigkeit, Integrationszeit und mittlerem Querschnitt des Rohres gebildet. Die Strömungsverluste über den Ringspalt führen zu einem systematischen Meßfehler, der durch den Korrekturwert ausgeglichen werden kann. Der Volumenstrom, der beim Sinken des Schwebekörpers, d.h. bei der Bewegung in Richtung der Rückstellkraft, die beispielsweise die Schwerkraft sein kann, am Schwebekörper vorbeifließt, fließt in etwa auch während des zu messenden Strömungspulses am Schwebekörpers vorbei. Die Integration der Menge pro Zeit über die Zeit, nämlich die Integrationszeit, ergibt damit einen Korrekturwert, der dem Ergebnis hinzugefügt werden kann, um die Durchflußmenge zu erhalten, da die Integrationszeit im wesentlichen der Dauer eines Strömungspulses entspricht.

Bei bekannten Abmessungen des Meßrohres und des Schwebekörpers, bei bekannter Viskosität des Fluids und bei bekannter Dauer des Strömungspulses läßt sich jedoch bevorzugterweise auch ein konstanter Korrekturwert vorgeben. Dies erspart eine Messung der Sinkgeschwindigkeit.

Die Aufgabe wird bei einem Durchflußmesser der eingangs genannten Art dadurch gelöst, daß eine Geschwindigkeitsmeßeinrichtung vorgesehen ist, die ständig die Geschwindigkeit der Bewegung des Schwebekörpers ermittelt.

Es wird also nicht die Dynamik von bekannten Durchflußmessern, die für kontinuierliche Durchflußmessung geeignet sind, soweit erhöht, daß auch diese für pulsförmige Strömung geeignet sind. Vielmehr wird ein Durchflußmesser angegeben, der nur für pulsförmige Strömungen einsetzbar ist. Bei dem neuen Schwebekörperdurchflußmesser wird nicht die Position des Schwebekörpers im Meßrohr bestimmt, sondern dessen Bewegungs- oder Hubgeschwindigkeit. Die Position des Schwebekörpers ist lediglich bei konstanter Strömungsgeschwindigkeit proportional der mittleren Strömungsgeschwindigkeit des Fluids. Der Vorteil des erfindungsgemäßen Durchflußmessers liegt in den wesentlich geringeren Kosten, verglichen mit einem Ultraschallmesser, einem magnetisch-induktiven Durchflußmesser oder einer Vorrichtung, die mit Laser-Doppler-Anemometrie arbeitet.

Bevorzugterweise ist das Meßrohr aus magnetisch nicht leitendem Material gebildet, der Schwebekörper weist eine Magnetfelderzeugungseinrichtung auf, eine das Meßrohr umgebende Spulenanordnung mit über die Länge des Meßrohres varriierender Wicklungsdichte ist vorgesehen und eine Auswerteeinrichtung ist mit der Spulenanordnung verbunden, die die durch eine Bewegung des Schwebekörpers induzierte Spannung auswertet. Mit magnetisch nicht leitendem Material ist Material gemeint, das ein Magnetfeld nicht beeinflußt. Es handelt sich hierbei in der Regel um nicht-magnetisierbares oder nicht-ferromagnetisches Material. Wäre die Wicklungsdichte, also die Zahl der Windungen pro Längeneinheit, über die gesamte Länge der Spule konstant, würde eine Bewegung des Schwebekörpers in der Spule keine Spannung induzieren. Eine Spannung ergibt sich nur dann, wenn sich der magnetische Fluß zeitlich ändert. Der magnetische Fluß ist ein Produkt aus magnetischer Feldstärke und Fläche, die von dem Magnetfeld durchsetzt wird. Die Fläche ist hierbei bestimmt durch den die Fläche umgebenden Leiter, in dem die Spannung induziert werden soll. Mit zunehmender Wicklungsdichte nimmt auch die Fläche, die vom Magnetfeld durchsetzt wird, zu. Wenn das gleiche Magnetfeld nämlich von doppelt soviel Windungen umgeben ist, ist die vom Magnetfeld durchsetzte Fläche auch doppelt so groß. Solange der Schwebekörper in Ruhe bleibt, induziert er keine Spannung, da sich weder das Magnetfeld noch die Fläche ändert. Sobald er sich aber bewegt, ändert sich, wie oben ausgeführt, die Fläche, so daß an der Spulenanordnung eine Spannung abgegriffen werden kann, die zum Zwecke der Ermittlung der Geschwindigkeit ausgewertet werden kann.

Dabei ist bevorzugt, daß die erste Ableitung der Wicklungsdichte über die Meßrohrlänge in einem Meßbereich entweder nur nicht positiv oder nur nicht negativ ist. Mit anderen Worten ist bevorzugt, daß die Wicklungsdichte im Meßbereich von einem Ende zum anderen entweder nur nicht zunimmt oder nur nicht abnimmt. In diesem Fall wird bei einer Bewegung des Schwebekörpers in eine bestimmte Richtung eine Spannung lediglich einer Polarität induziert. Bei dieser Ausführungsform läßt sich nicht nur die Geschwindigkeit, sondern auch die Richtung der Bewegung des Schwebekörpers ermitteln.

Um zu verhindern, daß der Schwebekörper bei ruhender Strömung unter dem Einfluß der Rückstellkraft aus dem Meßbereich herausgeführt wird, kann ein Anschlag vorgesehen sein, der das Ende des Bewegungsbereichs des Schwebekörpers bildet. Bevorzugterweise ist aber auch am anderen Ende des Bewegungsbereichs ein Anschlag vorgesehen, um zu verhindern, daß bei zu starken Strömungspulsen der Schwebekörper aus dem Bereich der Spule herausgetragen werden kann.

Um zu gewährleisten, daß jede Bewegung des Schwebekörpers erfaßt werden kann, ist bevorzugt, daß die Spulenanordnung über den Bewegungsbereich des Schwebekörpers hinausragt. Hierdurch wird erreicht, daß in jeder Stellung des Schwebekörpers das gleiche Magnetfeld der Magnetfelderzeugungseinrichtung durch die Spulenanordnung aus- bzw. eintritt. Ein starker Spannungsimpuls, der durch das Eintreten des Schwebekörpers in die Spulenanordnung induziert werden würde, wird hierdurch vermieden. Die Magnetfelderzeugungseinrichtung kann als Permanentmagnet, aber auch als Elektromagnet ausgebildet sein. Ein Permanentmagnet hat den Vorteil, daß er ohne zusätzliche elektrische Leitungen auskommt.

Wie weit die Spulenanordnung über den Bewegungsbereich des Schwebekörpers hinausragen muß, hängt von der Art und der Abmessung der Magnetfelderzeugungseinrichtung ab. In einer bevorzugten Ausgestaltung ragt die Spulenanordnung um mindestens einen Meßrohrinnendurchmesser über den Bewegungsbereich des Schwebekörpers hinaus. Versuche haben ergeben, daß mit einem derartigen Aufbau eine ausreichende Meßgenauigkeit erzielbar ist.

In einer bevorzugten Ausführungsform steigt die Wicklungsdichte im Meßbereich linear an und der Meßrohrinnendurchmesser ist konstant. In diesem Fall ist das am Ausgang der Spulenanordnung abgreifbare Spannungssignal direkt proportional zur Geschwindigkeit des Schwebekörpers.

In der Praxis ist es aber nur sehr schwer möglich, die Wicklungsdichte kontinuierlich über die gesamte Länge des Meßbereichs zu erhöhen bzw. zu senken. In einer bevorzugten Ausführungsform nimmt deswegen die Wicklungsdichte im Meßbereich stufenförmig zu, wobei die Länge der Magnetfelderzeugungseinrichtung gleich groß oder größer als der Abstand der Stufen ist. Dies ist die einfachste Form der Änderung der Wicklungsdichte. Bei einer Bewegung des Schwebekörpers, dessen eines Ende sich im Bereich einer größeren Wicklungsdichte als das andere Ende befindet, wird also die vom Magnetfeld durchsetzte Fläche ständig größer. Durch die endliche Ausdehnung der Magnetfelderzeugungseinrichtung erfolgt hier eine gewisse Tiefpass-Filterung, so daß die Spannungssprünge begrenzt bleiben.

Um ein noch besser geglättetes Ausgangssignal der Spulenanordnung zu erhalten, ist bevorzugt, daß die Wicklungsdichte in jeder Stufe anwächst. In diesem Fall ergibt sich eine Anzahl von Wicklungsdichte-Stufen, wobei die Wicklungsdichte in jeder Stufe nicht konstant bleibt. Man kann dies beispielsweise dadurch realisieren, daß eine neu hinzukommende Wicklungslage nicht sofort dicht gewickelt wird, sondern daß man bei jeder neu hinzu kommenden Wicklungslage mit einem großen Wicklungsabstand beginnt und diesen kontinuierlich senkt, bis der Wicklungsabstand dem Drahtdurchmesser entspricht, die dichteste Wicklung also erreicht ist.

Die einfachste Auswertung kann man dann erzielen, wenn das Meßrohr einen konstanten Innendurchmesser hat. In diesem Fall ist das Spannungssignal im wesentlichen proportional zur Geschwindigkeit des Schwebekörpers. Um auch bei einer Zunahme des Innendurchmessers des Meßrohres ein Spannungsausgangssignal zu erhalten, das im wesentlichen proportional zur Geschwindigkeit des Schwebekörpers ist, ist bevorzugt, daß sich die Wicklungsdichte in Abhängigkeit von der Zunahme des Innendurchmessers des Meßrohres ändert.

Es kann auch bevorzugt sein, daß die Spulenanordnung mehrere Spulen aufweist, die einander dicht benachbart sind. Dies kann dann sinnvoll sein, wenn der Bewegungsbereich des Schwebekörpers sehr groß ist. In diesem Fall wäre eine sehr lange Einzelspule notwendig, die sich nur schwer fertigen läßt. Sie kann aber ohne Probleme durch zwei oder mehrere Spulen ersetzt werden. Hierbei müssen die einzelnen Spulen auf dem Meßrohr lediglich dicht aneinander anschließen. Werden die Spulen dann in Reihe geschaltet, erhält man als Ausgangssignal der Reihenschaltung ein Signal, das dem Ausgangssignal einer einzelnen Spule entspricht.

Bei einer derartigen Anordnung ist es jedoch bevorzugt, daß die Ausgänge der Spulen einzeln verstärkt und dann aufsummiert werden. Die Summation kann analog oder digital erfolgen. Bei dieser Ausführungsform ist die Gefahr von Störungen, die von außen eingestreut werden können, geringer.

Da dem Ausgangssignal der Spulenanordnung ein hochfrequentes Rauschen überlagert sein kann, kann es vorteilhaft sein, zwischen Spulenanordnung und Auswerteeinrichtung ein Tiefpassfilter anzuordnen.

In einer bevorzugten Ausführungsform weist die Auswerteeinrichtung einen das Ausgangssignal der Spulenanordnung über die Zeit integrierenden Integrator auf. Da die in der Spulenanordnung induzierte Spannung ein Maß für die Geschwindigkeit ist, kann der Integrator den Weg ermitteln, den der Schwebekörper zurückgelegt hat. Der zurückgelegte Weg ist jedoch, wie oben beschrieben, ein Maß für die Menge des Fluids, die durch den Durchflußmesser geflossen ist.

Bevorzugterweise ist der Integrator mit einem Spitzenwertmesser verbunden. Hiermit läßt sich problemlos die maximale "Steighöhe", d.h. die äußerste Position des Schwebekörpers in Richtung der Strömung, ermitteln.

Auch ist bevorzugt, daß mit dem Ausgang der Spulenanordnung ein Diskriminator verbunden ist, der bei Überschreiten eines vorbestimmten ersten Spannungswerts den Integrator und den Spitzenwertmesser startet und bei Unterschreiten eines vorbestimmten zweiten Spannungswert den Integrator und den Spitzenwertmesser anhält. Der Diskriminator stellt also fest, ob sich der Schwebekörper überhaupt bewegt. Erst wenn sich der Schwebekörper bewegt, wird die Integration und damit die eigentliche Ermittlung des Volumens gestartet.

In einer Ausführungsform ist der Schwebekörper von einer Feder beaufschlagt. Hierbei lassen sich auch Strömungspulse von hochviskosten Flüssigkeiten ermitteln.

Die Erfindung wird im folgenden anhand von bevorzugten Ausführungsbeispielen in Verbindung mit der Zeichnung erläutert. Darin zeigen:
- Fig. 1: eine schematische Darstellung der Wirkungsweise einer Geschwindigkeitsmeßeinrichtung,
- Fig. 2: eine erste Ausführungsform eines Durchflußmessers,
- Fig. 3: eine zweite Ausführungsform des Durchflußmessers,
- Fig. 4: ein Schaltschema für die elektrische Verschaltung des Duchflußmessers nach Fig. 2,
- Fig. 5: eine elektrische Verschaltung der Spulenanordnung nach Fig. 3,
- Fig. 6: einen ersten Verlauf der Wicklungsdichte,
- Fig. 7: einen zweiten Verlauf einer Wicklungsdichte,
- Fig. 8: einen dritten Verlauf einer Wicklungsdichte,
- Fig. 9: den Verlauf der Strömungsgeschwindigkeit des Fluids über der Zeit,
- Fig. 10: den Verlauf der Geschwindigkeit des Schwebekörpers über der Zeit und
- Fig. 11: die Position des Schwebekörpers im Meßrohr über der Zeit.

In einem Meßrohr 1 ist ein Schwebekörper 2 frei beweglich. Das Meßrohr 1 steht senkrecht, so daß auf den Schwebekörper 2 die Erdanziehungskraft als Rückstellkraft wirkt. Die Rückstellkraft kann auch durch eine Feder erzeugt werden, die zusätzlich zu oder anstelle der Erdanziehungskraft wirkt. Das Meßrohr 1 wird von einem Fluid in Richtung des Pfeiles von unten nach oben, also entgegen der Schwerkraftrichtung, durchströmt. Der Schwebekörper 2 hat einen geringeren Durchmesser als der Innendurchmesser des Meßrohres 1, so daß zwischen dem Schwebekörper 2 und dem Meßrohr 1 ein Ringspalt 8 gebildet ist. Das Fluid kann durch diesen Ringspalt 8 strömen. Die im Ringspalt erzeugte Drosselwirkung und die Strömungskräfte erzeugen eine Druckdifferenz zwischen den beiden Seiten des Schwebekörpers 2. Die aus der Druckdifferenz resultierende Kraft auf den Schwebekörper 2 bewirkt, daß sich der Schwebekörper mit dem Fluid in Richtung des Pfeiles bewegt. Die Bewegung des Schwebekörpers 2 wird auch durch Reibungskräfte unterstützt, die zwischen dem Fluid und dem Schwebekörper 2 entstehen.

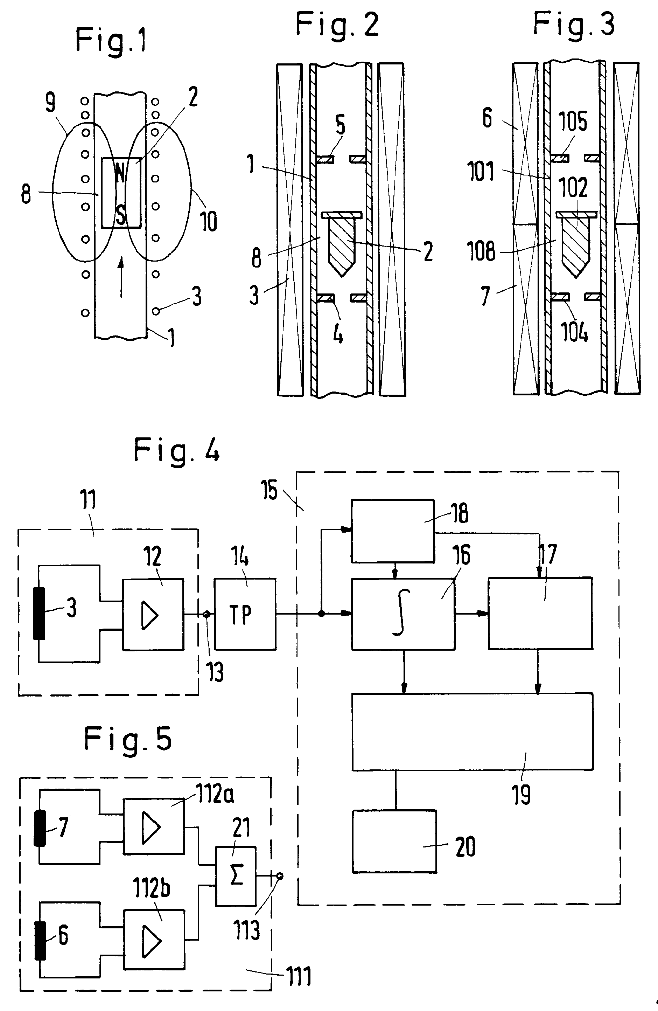

Der Schwebekörper 2 weist eine Magnetfelderzeugungseinrichtung auf, die in Fig. 1 schematisch durch den Nordpol N und den Südpol S dargestellt ist. In Wirklichkeit wird nicht der gesamte Schwebekörper 2 aus der Magnetfelderzeugungseinrichtung bestehen. Die Magnetfelderzeugungseinrichtung kann beispielsweise durch einen Permanentmagneten gebildet sein. Der Magnet erzeugt ein Magnetfeld, das durch zwei Feldlinien 9, 10 angedeutet ist.

Die Spule 3 weist eine in Richtung des Pfeiles zunehmende Wicklungsdichte auf, d.h. der Abstand zwischen einzelnen Wicklungen verringert sich, so daß die Anzahl der Wicklungen pro Längeneinheit des Meßrohres steigt. Es ist natürlich auch möglich, Wicklungen konstant dicht an dicht liegen zu lassen, wenn mehrere Wicklungsschichten oder -lagen aufgebracht werden, wobei die Anzahl der Wicklungslagen in Richtung des Pfeiles ansteigt. In einer abgewandelten Ausführungsform kann die Anzahl der Wicklungslagen in Pfeilrichtung auch abnehmen.

Bekanntlich wird in einem Leiter eine Spannung induziert, wenn sich der magnetische Fluß in der vom Leiter umgrenzten Fläche ändert. Der magnetische Fluß ist das Produkt aus Magnetfeldstärke und Fläche. Eine Spannung kann also sowohl dadurch induziert werden, daß sich das Magnetfeld ändert, als auch dadurch, daß sich die Fläche ändert. Im vorliegenden Fall wird das Feld der Magnetfelderzeugungseinrichtung als konstant angenommen. Bei einer Bewegung des Schwebekörpers 2 in Richtung des Pfeiles oder in die entgegengesetzte Richtung ändert sich jedoch die vom Magnetfeld durchsetzte Fläche. Wenn man annimmt, daß sich der Schwebekörper 2 am unteren Ende der in Fig. 1 dargestellten Anordnung befindet, durchsetzen die Feldlinien 9, 10 lediglich vier Windungen. Am oberen Ende würden die magnetischen Feldlinien 9, 10 hingegen sechs Windungen durchsetzen. Da die Windungen jeweils in Reihe geschaltet sind, entspricht eine Zunahme der Windungszahl einer entsprechenden Zunahme der vom Magnetfeld durchsetzten Fläche, im vorliegenden Fall um die Hälfte. Somit nimmt der Fluß durch die Spulenanordnung 3 zu. Bei einer Bewegung des Schwebekörpers 2 in Richtung des Pfeiles wird also eine positive Spannung induziert, wobei die Amplitude der Spannung abhängig von der Geschwindigkeit des Schwebekörpers 2 ist, also von der Geschwindigkeit, mit der sich die vom Magnetfeld durchsetzte Fläche ändert.

Das Meßrohr 1 besteht aus magnetisch nicht-leitendem Material, so daß es das durch die Magnetfelderzeugungseinrichtung auf dem Schwebekörper 2 erzeugte Magnetfeld nicht beeinflußt. Der Bewegungsbereich des Schwebekörpers 2 ist durch einen unteren Anschlag 4 und einen oberen Anschlag 5 begrenzt. Der untere Anschlag 4 verhindert, daß der Schwebekörpers 2 unter dem Einfluß der Schwerkraft bei ruhendem Fluid im Meßrohr 1 nach unten aus dem Meßrohr 1 herauswandert. Der obere Anschlag 5 verhindert, daß der Schwebekörper 2 bei zu starken Strömungspulsen aus dem Bereich der Spule 3 herausgetragen wird. Die Spule 3, die, wie in Fig. 1 gezeigt, eine nicht-konstante Wicklungsdichte über die Länge des Meßrohres 1 aufweist, ragt deutlich über den unteren Anschlag 4 und den oberen Anschlag 5 hinaus, ragt also über den Bewegungsbereich des Schwebekörpers 2 und damit über den Meßbereich hinaus. Dadurch wird erreicht, daß in jeder Stellung des Schwebekörpers 2 das gleiche Magnetfeld der Magnetfelderzeugungseinrichtung durch die Spule aus- bzw. eintritt. Wie weit die Spulenanordnung 3 über den Bewegungsbereich des Schwebekörpers 2 hinausragen muß, hängt von der Art des magnetischen Materials und von der Geometrie der Magnetfelderzeugungseinrichtung ab. Versuche haben ergeben, daß ein Überstand von einem Meßrohrinnendurchmesser ausreichend ist.

Fig. 3 zeigt eine weitere Ausgestaltung eines Durchflußmessers, bei der Teile, die denen der Fig. 1 und 2 entsprechen, mit um 100 erhöhten Bezugszeichen versehen sind. Die Spulenanordnung wird hier durch zwei Spulen 6, 7 gebildet, die einander dicht benachbart um das Meßrohr 101 angeordnet sind. Dies hat den Vorteil, daß man kürzere Spulen verwenden kann, ohne den Bewegungsbereich des Schwebekörpers 102 einzuschränken. Der Bewegungsbereich des Schwebekörpers 102 kann mit dieser Maßnahme sehr groß gemacht werden, zumal auch mehr als zwei Spulen verwendet werden können.

Fig. 4 zeigt ein Schaltschema zur Auswertung der durch die Bewegung des Schwebekörpers 2 induzierten Spannung für den Durchflußmesser nach Fig. 1 und 2. Die Spule 3 bildet zusammen mit einem Verstärker 12 eine Spulenanordnung. Der Verstärker 12 verstärkt dabei das in der Spule 3 erzeugte Spannungssignal um einen konstanten Faktor. Der Ausgang des Verstärkers 12 ist mit dem Ausgang 13 der Spulenanordnung 11 verbunden. Der Ausgang 13 der Spulenanordnung 11 ist wiederum mit einem Eingang eines Tiefpassfilters 14 verbunden. Der Tiefpassfilter 14 eliminiert ein möglicherweise vorhandenes Rauschen. Der Tiefpassfilter 14 kann bei einer entsprechenden Signalaufbereitung auch entfallen. Natürlich kann der Tiefpassfilter 14 auch zwischen der Spule 3 und dem Verstärker 12 angeordnet sein. Der Tiefpassfilter 14 ist mit einer Auswerteeinrichtung 15 verbunden. Die Auswerteeinrichtung 15 weist einen mit dem Tiefpassfilter verbundenen Integrator 16 auf, der wiederum mit einem Spitzenwertmesser 17 verbunden ist. Der Integrator 16 und der Spitzenwertmesser 17 sind darüber hinaus mit einem Diskriminator 18 verbunden, der auch mit dem Tiefpassfilter 14 verbunden ist. Der Diskriminator 18 stellt fest, wann am Ausgang des Tiefpassfilters 14 eine vorbestimmte Spannung überschritten wird und startet zu diesem Zeitpunkt den Integrator 16 und den Spitzenwertmesser 17. Der Diskriminator 18 stellt auch fest, wann am Ausgang des Tiefpassfilters 14 eine vorbestimmte zweite Spannung unterschritten wird und stoppt zu diesem Zeitpunkt den Integrator 16 und den Spitzenwertmesser 17 und setzt sie gegebenenfalls zurück. Der Integrator kann sowohl in positive als auch in negative Richtung integrieren, d.h. er ist sowohl für positive Spannungen als auch für negative Spannungen geeignet. Der Integrator 16 und der Spitzenwertmesser 17 sind mit einer Recheneinrichtung 19 verbunden. Die Recheneinrichtung 19 ist wiederum mit einer Anzeige 20 verbunden.

Fig. 5 zeigt einen Teil der Schaltungsanordnung für einen Durchflußmesser nach Fig. 3. Grundsätzlich ist es möglich, die beiden Spulen 6, 7 in Reihe zu schalten. In diesem Fall erhält man ein Ausgangssignal, das dem der Einzelspule 3 nach Fig. 2 entspricht. Es ist jedoch auch möglich, die Ausgangssignale der Spulen 6, 7 mit einzelnen Verstärkern 112a, 112b getrennt zu verstärken und erst dann einer Summierstufe 21 zuzuführen. Der Ausgang der Summierstufe 21 ist dann mit dem Ausgang 113 der Spulenanordnung 111 verbunden. An den Ausgang 113 kann sich, wie in Fig. 4, der Tiefpassfilter 14 mit der Auswerteeinrichtung 15 anschließen. Es ist einleuchtend, daß die Anzahl der Spulen nicht auf zwei beschränkt ist. Die Anordnung nach Fig. 5 läßt sich sinngemäß auch auf mehr als zwei Spulen erweitern.

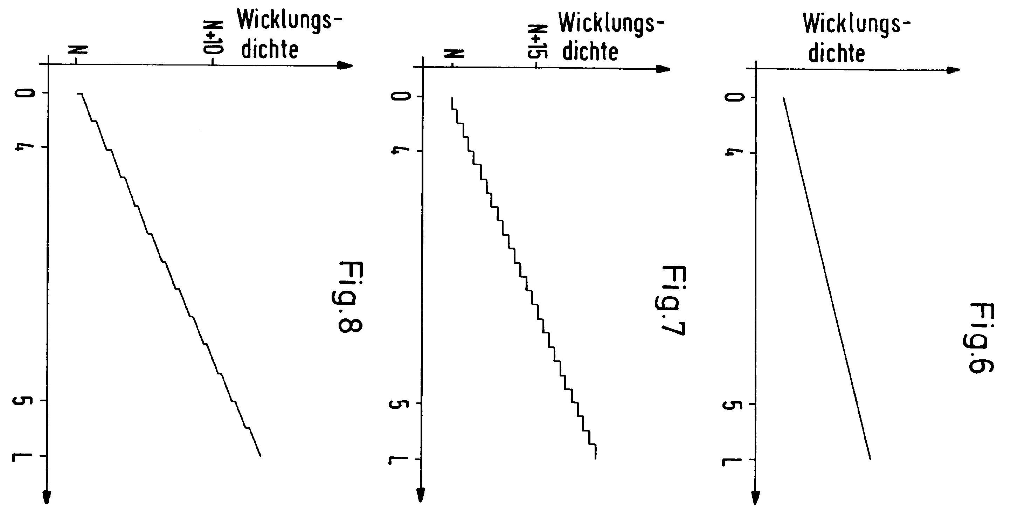

Die Wicklungsdichte der Spule 3 nimmt über die Länge des Meßrohres 1 kontinuierlich zu. Dies ist in Fig. 6 beispielhaft dargestellt. Eingetragen ist auch die Position des unteren Anschlags 4 und des oberen Anschlags 5. Der Beginn der Spule ist mit 0, das Ende der Spule ist mit L gekennzeichnet. Möglich wäre auch eine Wicklung der Spule 3, bei der die Wicklungsdichte mit zunehmender Länge sinkt statt, wie in Fig. 6 dargestellt, ansteigt.

Ebenso ist es möglich, die Wicklungsdichte zwischen 0 und 4 bzw. zwischen 5 und L konstant zu halten und nur zwischen dem unteren Anschlag 4 und dem oberen Anschlag 5, also im Meß- oder Bewegungsbereich des Schwebekörpers 2, kontinuierlich zu ändern. Ein linearer Anstieg bzw. Abfall der Wicklungsdichte ist für Meßrohre zu bevorzugen, deren Querschnittsfläche über die Gesamtlänge konstant ist. Verwendet man jedoch ein Meßrohr mit nach oben zunehmendem Querschnitt, müssen die nach oben hin zunehmenden Strömungsverluste über den Ringspalt 8 zwischen Meßrohr 1 und Schwebekörper 2 durch eine spezielle Spulenwicklung ausgeglichen werden. Hierbei tritt der Effekt auf, daß mit zunehmender Höhe und gleichbleibender Strömungsgeschwindigkeit der Schwebekörper 2 immer langsamer wird. Dies kann dadurch kompensiert werden, daß die vom Magnetfeld durchsetzte Fläche entsprechend schneller zunimmt. Dies läßt sich beispielsweise durch eine Wicklungsdichte erreichen, die nicht linear über die Spulenlänge zunimmt. Auf jeden Fall ist die Ableitung der Wicklungsdichte über die Länge des Meßrohres immer nur nicht positiv oder nur nicht negativ.

Bei einer Bewegung des Schwebekörpers innerhalb der Spule wird eine Spannung induziert, deren Amplitude der Geschwindigkeit des Schwebekörpers proportional ist. Die Amplitude ist ebenfalls proportional zur Änderung der Wicklungsdichte. Da dieser jedoch bei der Ausführungsform nach Fig. 6 als konstant angenommen ist, ist die in der Spule induzierte Spannung direkt proportional zur Geschwindigkeit des Schwebekörpers. Eine Bewegung des Schwebekörpers mit konstanter Geschwindigkeit zwischen dem unteren Anschlag 4 und dem oberen Anschlag 5 induziert eine konstante positive Spannung in der Spule, falls der Nordpol der Magnetfelderzeugungseinrichtung im Schwebekörper in Richtung der zunehmenden Wicklungsdichte zeigt. Bei Bewegungsumkehr wird eine negative Spannung in der Spule 3 induziert. Es ist somit möglich, sowohl die Geschwindigkeit als auch die Richtung der Bewegung des Schwebekörpers 2 innerhalb des Meßrohres 1 berührungsfrei zu ermitteln.

In der Praxis ist es aber nur sehr schwer möglich, die Wicklungsdichte kontinuierlich über die gesamte Länge der Spule 3 zu erhöhen bzw. zu senken. Die einfachste Form der Änderung der Wicklungsdichte ist es, die Wicklungsdichte stufenweise zu erhöhen, wie dies in Fig. 7 dargestellt ist. Pro Längeneinheit wird abschnittsweise die Zahl der Windungen um eine vorbestimmte Anzahl erhöht. Bei einer Bewegung des Schwebekörpers 2 im Meßrohr 1 wird jedesmal dann ein Spannungsimpuls in der Spule 3 induziert, wenn das Magnetfeld des Schwebekörpers 2 in den Bereich einer Wicklungsdichte-Stufe gelangt, sich also die vom Magnetfeld durchsetze Fläche ändert. Hierbei hängt die Amplitude des Spannungsimpulses nur von der Geschwindigkeit des Schwebekörpers ab. Wenn die Magnetfelderzeugungseinrichtung gleich groß wie oder größer als der Abstand der Stufen ist, wirkt die Magnetfelderzeugungseinrichtung ausgleichend, d.h. es entsteht am Ausgang der Spulenanordnung 11 bei einer konstanten Geschwindigkeit des Schwebekörpers 2 ein fast gleichförmiges Spannungssignal, d.h. ein Spannungssignal, das praktisch keine Sprungstellen aufweist.

Eine etwas bessere, aber auch aufwendigere Möglichkeit, die Wicklungsdichte zu erhöhen, zeigt Fig. 8. Hier sind zwar ebenfalls Wicklungsdichte-Stufen vorhanden. In jeder Stufe nimmt aber die Wicklungsdichte stetig zu. Dies wird dadurch erreicht, daß bei einer hinzukommenden Wicklungslage, d.h. einer neuen Wicklungsstufe, die Leiter nicht sofort dicht, also mit gegenseitiger Berührung innerhalb der Lage, gewickelt werden, wie es in Fig. 7 der Fall ist, sondern der Wicklungsabstand wird in jeder neu hinzukommenden Lage am Anfang größer gehalten und dann kontinuierlich gesenkt, bis der Wicklungsabstand in der Lage dem Drahtdurchmesser entspricht.

Kleinere Sprünge in der Wicklungsdichte lassen sich zu Beginn einer jeden neuen Wicklungslage, d.h. Stufe, nicht vermeiden, die Sprünge sind jedoch wesentlich geringer als die Sprünge nach Fig. 7. Durch die schon angesprochene mittelnde Wirkung der Magnetfelderzeugungseinrichtung im Schwebekörper 2 erhält man bei dieser Art der Wicklung einen nahezu konstanten Spannungsverlauf über die Länge der Spule, wenn sich der Schwebekörper 2 mit konstanter Geschwindigkeit bewegt.

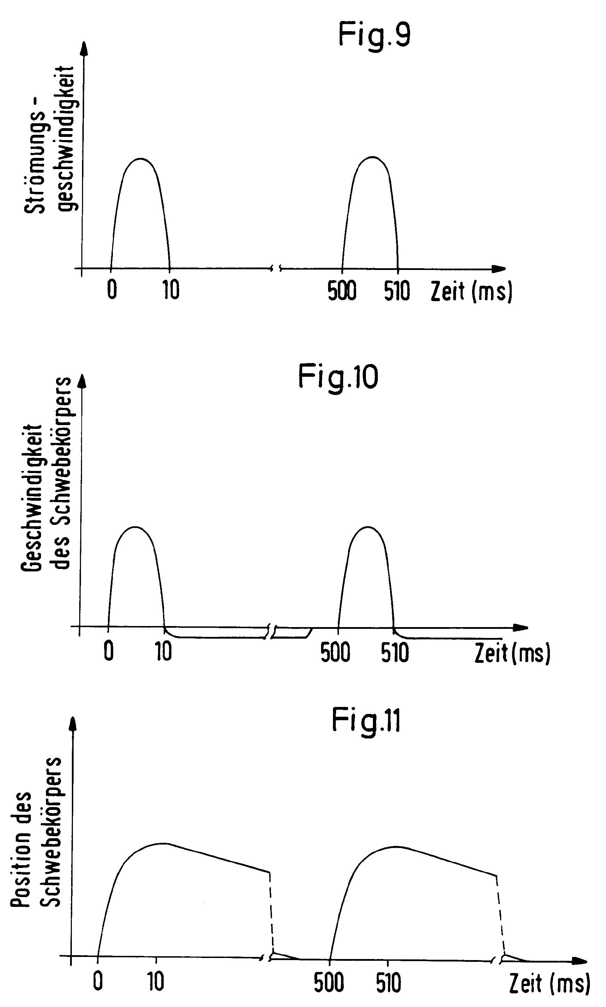

Die dargestellten Durchflußmesser sind insbesondere zur Messung der Durchflußmenge eines Fluids geeignet, das den in Fig. 9 dargestellten Strömungsverlauf hat. Das Fluid fließt nicht stetig oder kontinuierlich, sondern in Form von Strömungspulsen, die eine relativ geringe Breite aber eine bestimmte Amplitude aufweisen. Die Amplitude muß hierbei nicht konstant sein. Ein derartiges Strömungsverhalten ergibt sich beispielsweise am Ausgang von Dosierpumpen. Mit den dargestellten Durchflußmessern ist es nun möglich, das Volumen eines jeden Strömungspulses relativ genau zu bestimmen. Während des Strömungspulses wird der Schwebekörper 2 mit dem Fluid mitgerissen. Würde kein Fluid am Schwebekörper 2 vorbeifließen, würde die Geschwindigkeit des Schwebekörpers mit der Geschwindigkeit des Fluids übereinstimmen. Da sich aber zwischen Schwebekörper 2 und der Wand des Meßrohres 1 ein Ringspalt 8 befindet und der Schwebekörper durch sein Eigengewicht eine Druckdifferenz zwischen Ober- und Unterseite des Schwebekörpers 2 erzeugt, strömt während des Strömungspulses Fluid am Schwebekörper 2 vorbei. Dadurch wird der Schwebekörper 2 ständig hinter der Fluidströmung zurückbleiben und eine etwas geringere Geschwindigkeit als das Fluid erreichen. Umgekehrt eröffnet aber der Ringspalt die Möglichkeit, daß der Schwebekörper wieder in seine Ausgangslage zurücksinken kann, wenn kein Strömungspulse vorhanden ist. Fig. 10 zeigt schematisch die Geschwindigkeit des Schwebekörpers. Die Geschwindigkeit ist also zur Zeit des Strömungspulses von der Strömungsgeschwindigkeit des Fluids abhängig. In diesem Fall wird eine positive Geschwindigkeit angenommen. Wenn der Strömungspuls geendet hat, sinkt der Schwebekörper mit einer sehr viel kleineren Geschwindigkeit, die hier als negativ angenommen wird, wieder in seine Ausgangslage zurück.

Integriert man die Hubgeschwindigkeit des Schwebekörpers 2 über die Dauer des Strömungspulses, erhält man die Steighöhe des Schwebekörpers 2 als Funktion der Zeit. Fig. 11 zeigt die Position des Schwebekörpers als Funktion der Zeit. Am Ende des Strömungspulses erreicht der Schwebekörper 2 seinen maximalen Hub. Die Position des Schwebekörpers 2 wird mit Hilfe des Integrators 16 ermittelt. Der Spitzenwert, also der maximale Hub, wird durch den Spitzenwertmesser 17 festgestellt. Ohne die Verluste über den Ringspalt würde der maximale Hub, multipliziert mit der mittleren Querschnittsfläche des Meßrohres, die gesuchte Durchflußmenge pro Strömungspuls ergeben. In diesem Fall kann man die maximale Hubhöhe durch die Integration der Hubgeschwindigkeit zwischen Beginn und Ende des Strömungspulses berechnen. Der Beginn und das Ende des Strömungspulses können durch den Diskriminator 18 bestimmt werden, der den Integrator startet, sobald eine minimale Geschwindigkeit des Schwebekörpers 2 überschritten wird, also eine vorgegebene erste Spannung überschritten wird, und der die Integration stoppt, sobald eine vorbestimmte zweite Hubgeschwindigkeit wieder unterschritten wird, also eine vorbestimmte zweite Spannung unterschritten wird. Die Berechnung, d.h. die Multiplikation des maximalen Hubs mit der Querschnittsfläche des Meßrohres kann in der Recheneinrichtung 19 erfolgen, die ihr Ergebnis in der Anzeige 20 anzeigen kann. Das Ergebnis kann aber auch direkt weiterverarbeitet werden, ohne angezeigt zu werden. Der Spitzenstrommesser 17 muß zu Beginn eines weiteren Strömungspulses, ebenso wie der Integrator 16, zurückgesetzt werden. Dies kann durch den Diskriminator 18 erfolgen.

Das beschriebene Verfahren ist immer dann ausreichend genau für die Bestimmung der Durchflußmenge eines Strömungspulses, wenn die Verluste über den Ringspalt 8 während eines Strömungspulses zu vernachlässigen sind, d.h. entweder der Ringspalt sehr eng, die Dichte des Schwebekörpers nur wenig größer als die Dichte des Fluids oder die Viskosität des Fluids sehr groß ist. In diesem Fall entspricht die Geschwindigkeit des Schwebekörpers 2 praktisch der Geschwindigkeit des Fluids. Während die Viskosität des Fluids vorgegeben ist, lassen sich die anderen Größen durch die Konstruktion des Schwebekörpers und damit die Ausbildung des Ringspalts stark beeinflußen. Die Strömungsverluste über den Ringspalt können jedoch nicht, wie es einerseits zu wünschen wäre, beliebig kleingemacht werden, da der Schwebekörper 2 zwischen zwei Strömungspulsen andererseits auch wieder auf den unteren Anschlag 4 im Meßrohr 1 zurücksinken muß. Da die Sinkgeschwindigkeit des Schwebekörpers 2 und die Strömungsverluste über den Ringspalt 8 während der Förderphase, d.h. während des Strömungspulses, dieselbe Ursache haben, bedeutet ein geringer Spaltverlust gleichzeitig eine sehr langsame Sinkgeschwindigkeit zwischen zwei Strömungspulsen. Dies würde aber bedeuten, daß ein sehr langer zeitlicher Abstand zwischen zwei Strömungspulsen notwendig wäre, damit der Schwebekörper 2 tatsächlich wieder auf den unteren Anschlag 4 zurücksinken kann. Um auch größere Verluste über den Ringspalt 8 zuzulassen, ermittelt man die Sinkgeschwindigkeit des Schwebekörpers 2, d.h. die Geschwindigkeit, mit der der Schwebekörper 2 bei nicht vorhandener bzw. geringer Strömung wieder auf den unteren Anschlag 4 zurücksinkt. Dies kann ebenfalls mit Hilfe des Integrators 16 geschehen, der die Sinkgeschwindigkeit über die Zeit integriert. Die integrierte Sinkgeschwindigkeit kann in der Recheneinrichtung 19 durch die Sinkzeit dividiert werden. Hierdurch ergibt sich die mittlere Sinkgeschwindigkeit. Man kann nun mit guter Nährung annehmen, daß der Volumenstrom, der während des Strömungspulses am Schwebekörper vorbeiströmt und zu einem systematischen Meßfehler führt, gleich ist mit dem Volumenstrom, der am Schwebekörper 2 während der Sinkphase vorbeiströmt. Die Recheneinrichtung 19 kann nun einen Korrekturwert bilden, indem sie die mittlere Sinkgeschwindigkeit mit der Dauer des Strömungspulses und dem mittleren Querschnitt des Meßrohres multipliziert. Der Korrekturwert wird zur unkorrigierten Durchflußmenge hinzu addiert. Auf diese Weise ist es möglich, den systematischen Fehler, der durch die Strömungsverluste am Ringspalt entsteht, zu korrigieren und ein Ergebnis zu erhalten, das mit einem sehr geringen Meßfehler behaftet ist. Gleichzeitig kann man hiermit eine hohe Sinkgeschwindigkeit des Schwebekörpers zulassen, so daß auch Messungen dann durchgeführt werden können, wenn die Strömungspulse mit einer relativ hohen Wiederholrate auftreten, wie dies beispielsweise bei Dosierpumpen mit Magnetantrieb der Fall ist.

Wenn sich die Betriebsbedingungen nicht ändern, kann man auch auf die Feststellung einiger Größen verzichten. So ist es beispielsweise möglich, die Verluste am Ringspalt 8 einmal zu bestimmen und hieraus einen konstanten Korrekturwert festzulegen, der in der Recheneinrichtung 19 dem Meßergebnis hinzu addiert wird. Weiterhin ist es möglich, auf die Feststellung des Endes des Strömungspulses zu verzichten, wenn die Breite des Strömungspulses, also seine Zeitdauer, bekannt ist. Dies ist in der Regel dann der Fall, wenn der Strömungspuls direkt am Ausgang der den Strömungspuls erzeugenden Einrichtung, also der Pumpe, ermittelt wird. Wenn die Dauer des Förderhubes der Dosierpumpe bekannt ist, kann man beispielsweise die Integration mit Beginn des Förderhubes starten, gegebenenfalls um eine Totzeit versetzt, und mit dem Ende des Förderhubes enden lassen. In diesem Fall ist es nicht mehr notwendig, zu ermitteln, ob sich der Schwebekörper 2 bewegt oder nicht.

## Patentansprüche

1. Verfahren zur Bestimmung der Durchflußmenge eines Fluids mit einer pulsierenden Strömung mit Hilfe eines in einem Meßrohr frei beweglichen Schwebekörpers, der entgegen der Strömungsrichtung von einer Rückstellkraft beaufschlagt ist, dadurch gekennzeichnet, daß die Geschwindigkeit des Schwebekörpers (2, 102) im Meßrohr (1, 101) ständig gemessen und aus der Geschwindigkeit des Schwebekörpers die Durchflußmenge ermittelt wird.

2. Verfahren nach Anspruch 1, dadurch gekennzeichnet, daß der Beginn der Bewegung des Schwebekörpers (2, 102) ermittelt wird, wobei die Geschwindigkeit über eine vorbestimmte Integrationszeit aufintegriert und der Integrationswert in die Durchflußmenge umgerechnet wird.

3. Verfahren nach Anspruch 2, dadurch gekennzeichnet, daß die Integrationszeit durch die Zeit zwischen Beginn und Ende der Bewegung des Schwebekörpers (2) in Strömungsrichtung bestimmt ist.

4. Verfahren nach Anspruch 2, dadurch gekennzeichnet, daß die Integrationszeit bei Strömungspulsen mit konstanter und bekannter Dauer vorgegeben wird, wobei die Integration am Beginn der Bewegung gestartet wird.

5. Verfahren nach Anspruch 3 oder 4, dadurch gekennzeichnet, daß der Beginn bzw. das Ende der Bewegung des Schwebekörpers (2, 102) durch das Überschreiten einer ersten bzw. Unterschreiten einer zweiten vorbestimmten Geschwindigkeit ermittelt wird.

6. Verfahren nach einem der Ansprüche 2 bis 5, dadurch gekennzeichnet, daß der Integrationswert mit dem mittleren Querschnitt des Meßrohres (1, 101) multipliziert wird, wobei gegebenenfalls ein Korrekturwert hinzugefügt wird, um die Durchflußmenge zu erhalten.

7. Verfahren nach Anspruch 6, dadurch gekennzeichnet, daß zur Ermittlung des Korrekturwerts eine mittlere Sinkgeschwindigkeit des Schwebekörpers (2, 102) in Richtung der Rückstellkraft ermittelt wird, solange kein Strömungspuls vorhanden ist.

8. Verfahren nach Anspruch 7, dadurch gekennzeichnet, daß die Sinkgeschwindigkeit aufintegriert und durch eine Sinkzeit dividiert wird.

9. Verfahren nach Anspruch 7 oder 8, dadurch gekennzeichnet, daß der Korrekturwert durch das Produkt aus mittlerer Sinkgeschwindigkeit, Integrationszeit und mittlerem Querschnitt des Meßrohres (1, 101) gebildet wird.

10. Verfahren nach Anspruch 6, dadurch gekennzeichnet, daß der Korrekturwert konstant ist.

11. Durchflußmesser zur Bestimmung der Durchflußmenge eines Fluids mit einer pulsierenden Strömung, mit einem Meßrohr (1,101) und einem im Meßrohr frei beweglichen Schwebekörper (2,102), der entgegen der Strömungsrichtung von einer Rückstellkraft beaufschlagt ist, dadurch gekennzeichnet, daß eine Geschwindigkeitsmeßeinrichtung (11, 15; 111) vorgesehen ist, die ständig die Geschwindigkeit der Bewegung des Schwebekörpers (2, 102) ermittelt.

12. Durchflußmesser nach Anspruch 11, dadurch gekennzeichnet, daß das Meßrohr (1, 101) aus magnetisch nicht leitendem Material gebildet ist, der Schwebekörper (2, 102) eine Magnetfelderzeugungseinrichtung (N, S) aufweist, eine das Meßrohr (1, 101) umgebende Spulenanordnung (3; 6, 7) mit über die Länge des Meßrohres (1, 101) variiender Wicklungsdichte vorgesehen ist und eine Auswerteeinrichtung (15) mit der Spulenanordnung (3; 6, 7) verbunden ist, die die durch eine Bewegung des Schwebekörpers (2, 102) induzierte Spannung auswertet.

13. Durchflußmesser nach Anspruch 12, dadurch gekennzeichnet, daß die erste Ableitung der Wicklungsdichte über die Meßrohrlänge in einem Meßbereich entweder nur nicht positiv oder nur nicht negativ ist.

14. Durchflußmesser nach Anspruch 12 oder 13, dadurch gekennzeichnet, daß das Meßrohr (1, 101) zumindest am in Strömungsrichtung vor dem Schwebekörper (2, 102) befindlichen Ende des Bewegungsbereichs des Schwebekörpers (2, 102) einen Anschlag (4, 5; 104, 105) aufweist.

15. Durchflußmesser nach einem der Ansprüche 12 bis 14, dadurch gekennzeichnet, daß die Spulenanordnung (3; 6, 7) über den Bewegungsbereich des Schwebekörpers (2, 102) hinausragt.

16. Durchflußmesser nach Anspruch 15, dadurch gekennzeichnet, daß die Spulenanordnung (3; 6, 7) um eine dem Doppelten des Meßrohrinnendurchmessers entsprechende Strecke über den Bewegungsbereich des Schwebekörpers (2, 102) hinausragt.

17. Durchflußmesser nach einem der Ansprüche 12 bis 16, dadurch gekennzeichnet, daß die Wicklungsdichte im Meßbereich linear ansteigt und der Meßrohrinnendurchmesser konstant ist.

18. Durchflußmesser nach einem der Ansprüche 12 bis 16, dadurch gekennzeichnet, daß die Wicklungsdichte im Meßbereich stufenförmig zunimmt, wobei die Länge der Magnetfelderzeugungseinrichtung (N, S) gleich groß oder größer als der Abstand der Stufen ist.

19. Durchflußmesser nach Anspruch 18, dadurch gekennzeichnet, daß die Wicklungsdichte in jeder Stufe anwächst.

20. Durchflußmesser nach einem der Ansprüche 12 bis 19, dadurch gekennzeichnet, daß sich die Wicklungsdichte in Abhängigkeit von der Zunahme des Innendurchmessers des Meßrohrs (1, 101) ändert.

21. Durchflußmesser nach einem der Ansprüche 12 bis 20, dadurch gekennzeichnet, daß die Spulenanordnung (6, 7) mehrere Spulen aufweist, die einander dicht benachbart sind.

22. Durchflußmesser nach Anspruch 21, dadurch gekennzeichnet, daß die Ausgänge der Spulen (6, 7) einzeln verstärkt und dann aufsummiert werden.

23. Durchflußmesser nach einem der Ansprüche 12 bis 22, dadurch gekennzeichnet, daß zwischen Spulenanordnung (3; 6, 7) und Auswerteeinrichtung (15) ein Tiefpassfilter (14) angeordnet ist.

24. Durchflußmesser nach einem der Ansprüche 12 bis 23, dadurch gekennzeichnet, daß die Auswerteeinrichtung (15) einen das Ausgangssignal der Spulenanordnung (3; 6, 7) über die Zeit integrierenden Integrator (16) aufweist.

25. Durchflußmesser nach Anspruch 24, dadurch gekennzeichnet, daß der Integrator (16) mit einem Spitzenwertmesser (17) verbunden ist.

26. Durchflußmesser nach Anspruch 24 oder 25, dadurch gekennzeichnet, daß mit dem Ausgang der Spulenanordnung (3; 6, 7) ein Diskriminator (18) verbunden ist, der bei Überschreiten eines vorbestimmten ersten Spannungswerts der Integrator (16) startet und bei Unterschreiten eines vorbestimmten zweiten Spannungswerts den Integrator (16) anhält.

27. Durchflußmesser nach einem der Ansprüche 11 bis 26, dadurch gekennzeichnet, daß der Schwebekörper (2, 102) von einer Feder beaufschlagt ist.

## Claims

1. A method for determining with the aid of a floating body moving freely in a measuring tube the through-flow quantity of a fluid which is flowing in a pulsating manner, which floating body is acted upon by a restoring force in the opposite direction to that of the flow, characterised in that the rate of movement of the floating body (2, 102) in the measuring tube (1, 101) is continuously measured and the through-flow quantity is determined from the rate of movement of the floating body.

2. A method according to claim 1, characterised in that the commencement of the movement of the floating body (2, 102) is determined, wherein the rate of movement is integrated over a predetermined integration time and the integration value is converted into the through-flow quantity.

3. A method according to claim 2, characterised in that the integration time is determined by virtue of the time between the commencement and the termination of the movement of the floating body (2) in the flow direction.

4. A method according to claim 2, characterised in that in the case of pulsating flows the integration time is predetermined with a constant and known duration, wherein the integration is started at the commencement of the movement.

5. A method according to claim 3 or 4, characterised in that the commencement and the termination of the movement of the floating body (2, 102) is determined by virtue of a first predetermined rate of movement being exceeded or by a second predetermined rate of movement not being achieved.

6. A method according to any one of claims 2 to 5, characterised in that the integration value is multiplied by the average cross-section of the measuring tube (1, 101), wherein if necessary a correction value is added, in order to determine the through-flow quantity.

7. A method according to claim 6, characterised in that in order to determine the correction value an average sink rate of the floating body (2, 102) is determined in the direction of the restoring force, for the duration of the period where there is no pulsating flow.

8. A method according to claim 7, characterised in that the sink rate is integrated and divided by a sink time.

9. A method according to claim 7 or 8, characterised in that the correction value is formed by the product of an average sink rate, integration time and average cross-section of the measuring tube (1, 101).

10. A method according to claim 6, characterised in that the correction value is constant.

11. A through-flow measuring device for the purpose of determining the through-flow quantity of a fluid having a pulsating flow, which through-flow measuring device comprises a measuring tube (1, 101) and a floating body (2, 102) which moves freely in the measuring tube, which floating body is acted upon by a restoring force in the opposite direction to that of the flow, characterised in that a rate of movement measuring device (11, 15; 111) is provided for continuously determining the rate of movement of the floating body (2, 102).

12. A through-flow measuring device according to claim 11, characterised in that the measuring tube (1, 101) is formed from a magnetic non-conductive material, the floating body (2, 102) comprises a device which produces a magnetic field (N, S), a coil arrangement (3; 6, 7) which surrounds the measuring tube (1, 101) and comprises a varying winding thickness over the length of the measuring tube (1, 101) and an evaluating device (15) is connected to the coil arrangement ( 3; 6, 7), which is evaluated by virtue of a voltage induced by a movement of the floating body (2, 102).

13. A through-flow measuring device according to claim 12, characterised in that the first derivation of the winding thickness over the measuring tube length in one measuring region is either only not positive or only not negative.

14. A through-flow measuring device according to claim 12 or 13, characterised in that the measuring tube (1, 101) comprises a stop (4, 5; 104, 105) at least at the end of the range of movement of the floating body (2, 102) located in the flow direction in advance of the floating body (2, 102).

15. A through-flow measuring device according to any one of claims 12 to 14, characterised in that the coil arrangement (3; 6, 7) protrudes beyond the range of movement of the floating body (2, 102).

16. A through-flow measuring device according to claim 15, characterised in that the coil arrangement (3; 6, 7) protrudes beyond the range of movement of the floating body (2, 102) by a distance which corresponds to double the inner diameter of the measuring tube.

17. A through-flow measuring device according to any one of claims 12 to 16, characterised in that the winding density increases linearly in the measuring region and the measuring tube inner diameter is constant.

18. A through-flow measuring device according to any one of claims 12 to 16, characterised in that the winding density increases in steps in the measuring region, wherein the length of the device producing the magnetic field (N, S) is equal in size or larger than the spacing of the steps.

19. A through-flow measuring device according to claim 18, characterised in that the winding density increases in each stage.

20. A through-flow measuring device according to any one of claims 12 to 19, characterised in that the winding density changes in dependence upon the increase of the inner diameter of the measuring tube (1, 101).

21. A through-flow measuring device according to any one of claims 12 to 20, characterised in that the coil arrangement (6, 7) comprises a plurality of coils, which are immediately adjacent to each other.

22. A through-flow measuring device according to claim 21, characterised in that the outputs of the coils (6, 7) are individually amplified and then totalled.

23. A through-flow measuring device according to any one of claims 12 to 22, characterised in that a low pass filter (14) is disposed between the coil arrangement (3; 6, 7) and evaluation device (15).

24. A through-flow measuring device according to any one of claims 12 to 23, characterised in that the evaluation device (15) comprises an integrator (16) which integrates the output signal of the coil arrangement (3; 6, 7) over the time.

25. A through-flow measuring device according to claim 24, characterised in that the integrator (16) is connected to a peak value measuring device (17).

26. A through-flow measuring device according to claim 24 or 25, characterised in that a discriminator (18) is connected to the output of the coil arrangement (3; 6, 7), which discriminator starts the integrator (16) when a predetermined first voltage value is exceeded and stops the integrator (16) when a predetermined second voltage value is not achieved.

27. A through-flow measuring device according to any one of claims 11 to 26, characterised in that the floating body (2, 102) is acted upon by a spring.

## Revendications

1. Procédé pour la détermination du débit d'un fluide ayant un écoulement pulsatoire à l'aide d'un flotteur librement mobile dans un tube de mesure, qui est sollicité en opposition au sens d'écoulement par une force de rappel, caractérisé en ce que la vitesse du flotteur (2, 102) dans le tube de mesure (1, 101) est mesurée de façon permanente et le débit est calculé à partir de la vitesse du flotteur.

2. Procédé selon la revendication 1, caractérisé en ce que l'on calcule le début du mouvement du flotteur (2, 102), la vitesse étant intégrée à un temps d'intégration prédéterminé et la valeur d'intégration est convertie en débit.

3. Procédé selon la revendication 2, caractérisé en ce que le temps d'intégration est calculé par le temps entre le début et la fin du mouvement du flotteur (2) dans le sens d'écoulement.

4. Procédé selon la revendication 2, caractérisé en ce que le temps d'intégration est préétabli pour des pulsions d'écoulement ayant une durée constante et connue, l'intégration étant mise en route au début du mouvement.

5. Procédé selon la revendication 3 ou 4, caractérisé en ce que le début ou la fin du mouvement du flotteur (2, 102) est calculé par le dépassement en plus d'une première vitesse prédéterminée ou le dépassement en moins d'une seconde vitesse prédéterminée.

6. Procédé selon l'une des revendications 2 à 5, caractérisé en ce que la valeur d'intégration est multipliée par la section moyenne du tube de mesure (1, 101), une valeur de correction étant éventuellement ajoutée pour obtenir le débit.

7. Procédé selon la revendication 6, caractérisé en ce que pour déterminer la valeur de correction, on calcule une vitesse de descente moyenne du flotteur (2, 102) dans le sens de la force de rappel tant qu'il n'y a pas de pulsion d'écoulement.

8. Procédé selon la revendication 7, caractérisé en ce que la vitesse de descente est intégrée et en ce qu'elle est divisée par un temps de descente.

9. Procédé selon la revendication 7 ou 8, caractérisé en ce que la valeur de correction est formée par le produit résultant de la vitesse de descente moyenne, du temps d'intégration et de la section moyenne du tube de mesure (1, 101).

10. Procédé selon la revendication 6, caractérisé en ce que la valeur de correction est constante.

11. Débitmètre pour la détermination du débit d'un fluide ayant un écoulement pulsatoire avec un tube de mesure (1, 101) et un flotteur (2, 102) librement mobile dans le tube de mesure qui est sollicité en opposition au sens d'écoulement par une force de rappel, caractérisé en ce qu'il est prévu un dispositif de mesure de vitesse (11, 15 ; 111) qui détermine la vitesse de mouvement du flotteur (2, 102).

12. Débitmètre selon la revendication 11, caractérisé en ce que le tube de mesure (1, 101) est réalisé à partir d'un matériau non conducteur magnétiquement, le flotteur (2, 102) comporte un dispositif de production de champ magnétique (N, S), un agencement de bobines (3 ; 6, 7) entourant le tube de mesure (1, 101) avec une densité d'enroulement variable sur la longueur du tube de mesure (1, 101) et un dispositif d'évaluation (15) relié à l'agencement de bobines (3 ; 6, 7) qui évalue par un mouvement du flotteur (2, 102) la tension induite.

13. Débitmètre selon la revendication 12, caractérisé en ce que la première dérivation de la densité d'enroulement sur la longueur du tube de mesure dans une plage de mesure est soit non uniquement positive, soit non uniquement négative.

14. Débitmètre selon la revendication 12 ou 13, caractérisé en ce que le tube de mesure (1, 101) présente au moins une butée (4, 5 ; 104, 105) sur l'extrémité se trouvant dans le sens d'écoulement en amont du flotteur (2, 102), de la plage de mouvement du flotteur (2, 102).

15. Débitmètre selon l'une des revendications 12 à 14, caractérisé en ce que l'agencement des bobines (3 ; 6, 7) fait saillie au-dessus de la plage de mouvement du flotteur (2, 102).

16. Débitmètre selon la revendication 15, caractérisé en ce que l'agencement des bobines (3 ; 6, 7) fait saillie sur un tronçon correspondant au double du diamètre interne du tube de mesure sur la plage de mouvement du flotteur (2, 102).

17. Débitmètre selon l'une des revendications 12 à 16, caractérisé en ce que la densité d'enroulement augmente linéairement dans la plage de mesure et le diamètre interne du tube de mesure est constant.

18. Débitmètre selon l'une des revendications 12 à 16, caractérisé en ce que la densité d'enroulement dans la plage de mesure augmente par paliers, la longueur du dispositif de production de champ magnétique (N, S) étant de grandeur égale ou supérieure à l'intervalle entre les paliers.

19. Débitmètre selon la revendication 18, caractérisé en ce que la densité d'enroulement augmente dans chaque palier.

20. Débitmètre selon l'une des revendications 12 à 19, caractérisé en ce que la densité d'enroulement varie en fonction de l'augmentation du diamètre interne du tube de mesure (1, 101).

21. Débitmètre selon l'une des revendications 12 à 20, caractérisé en ce que l'agencement des bobines (6, 7) présente plusieurs bobines qui sont disposées côte à côte.

22. Débitmètre selon la revendication 21, caractérisé en ce que les sorties des bobines (6, 7) sont amplifiées individuellement, puis additionnées.

23. Débitmètre selon l'une des revendications 12 à 22, caractérisé en ce qu'entre le dispositif de bobines (3 ; 6, 7) et le dispositif d'évaluation (15) est disposé un filtre passe-bas (14).

24. Débitmètre selon l'une des revendications 12 à 23, caractérisé en ce que le dispositif d'évaluation (15) présente un intégrateur intégrant dans le temps le signal de sortie du dispositif de bobines (3 ; 6, 7).

25. Débitmètre selon la revendication 24, caractérisé en ce que l'intégrateur (16) est relié à un dispositif de mesure de valeur de pointe (17).

26. Débitmètre selon la revendication 24 ou 25, caractérisé en ce qu'un discriminateur (18) est raccordé à la sortie du dispositif de bobines (3 ; 6, 7), discriminateur qui se met en route lors du dépassement en plus d'une première valeur de tension prédéterminée de l'intégrateur (16) et qui arrête l'intégrateur (16) lors du dépassement en moins d'une seconde valeur de tension prédéterminée.

27. Débitmètre selon l'une des revendications 11 à 26, caractérisé en ce que le flotteur (2, 102) est sollicité par un ressort.
